# FASCICULE DE BREVET EUROPEEN

(11) **EP 1 567 336 B1**
(45) Date de publication et mention de la délivrance du brevet: **14.06.2006**
(21) Numéro de dépôt: 03775405.8
(22) Date de dépôt: 01.10.2003
(51) Int. Cl.: B32B 27/32, B60N 3/04

(54) **PRODUITS MULTICOUCHES, PROCEDE POUR LEUR FABRICATION ET UTILISATION DESDITS PRODUITS MULTICOUCHES**
MEHRLAGIGE PRODUKTE, HERSTELLUNGSVERFAHREN DAFÜR UND IHRE VERWENDUNG
MULTI-LAYER PRODUCTS, PRODUCTION METHOD THEREOF AND USE OF SAME

(30) Priorité: 02.12.2002 EP 02292967
(43) Date de publication de la demande: 31.08.2005
(73) Titulaire: Tarkett SAS, 92748 Nanterre Cédex (FR)
(72) Inventeur: FORGET, Luc, L-9761 Lentzweiler (LU); SICHE, Alexandre, L-9540 Wiltz (LU)
(74) Mandataire: Kihn, Pierre Emile Joseph
(86) Numéro de dépôt international: PCT/EP2003/050676
(87) Numéro de publication internationale: WO 2004/050360

(56) Documents cités:
- US-A- 5 350 471
- US-A- 6 114 046
- PATENT ABSTRACTS OF JAPAN vol. 2002, no. 12, 12 décembre 2002 (2002-12-12) & JP 2002 219030 A (MARUTAKA SEIHAN:KK), 6 août 2002 (2002-08-06)
- PATENT ABSTRACTS OF JAPAN vol. 2002, no. 11, 6 novembre 2002 (2002-11-06) & JP 2002 210895 A (MITSUI CHEMICALS INC), 31 juillet 2002 (2002-07-31)

## Description

L'invention a pour objet des produits composites multicouches, utilisés notamment pour la confection de revêtements de sols ou de revêtements muraux, ainsi que pour l'habillage intérieur de véhicules servant au transport de personnes, tels que des voitures automobiles, des voitures de chemin de fer, des cabines de navires et des cockpits d'avions.

L'invention concerne plus spécialement des produits multicouches comprenant un substrat polymérique et une couche d'usure contenant du copolymère de type ionomère, ainsi qu'un procédé pour la fabrication de tels produits multicouches.

Pour la fabrication des revêtements de sols et muraux, ainsi que des habillages d'habitacles de véhicules, on utilise habituellement des produits multicouches en feuilles, comprenant une couche de support ou substrat et une couche superficielle d'usure. La couche de support présente généralement une face décorative sur laquelle est appliquée la couche d'usure. Celle-ci sert à protéger la face décorative du substrat. Elle est habituellement transparente et doit présenter une résistance adéquate aux agressions mécaniques (chocs, abrasion) et aux agressions chimiques dans les conditions normales d'utilisation. Ces fonctions des produits multicouches conditionnent le choix des matières utilisées pour les fabriquer. Ce choix est en outre conditionné par des considérations sanitaires, environnementales et de mise en oeuvre. En particulier, les produits multicouches doivent s'accommoder d'une mise en oeuvre par laminage ou thermoformage, ce qui implique l'usage de polymères thermoplastiques. L'adhérence des couches superposées doit être suffisante pour assurer la cohésion du produit multicouche dans les applications auxquelles on le destine. Il est en outre souhaitable de sélectionner des matières qui permettent un recyclage des produits multicouches usagés. Il convient par ailleurs d'éviter ou de limiter l'exsudation de matières volatiles (tels que des plastifiants) pendant l'usage de ces produits multicouches.

Le polychlorure de vinyle (PVC) a longtemps été utilisé pour la fabrication de produits multicouches en feuilles destinés à la confection de tapis, revêtements muraux ou habillages d'habitacles de véhicules. Toutefois, des considérations liées à la protection de l'environnement militent pour le remplacement du polychlorure de vinyle par des polymères ou des copolymères exempts de chlore. Le choix s'est tout naturellement porté sur les polymères et copolymères oléfiniques, spécialement les polymères et les copolymères de l'éthylène et du propylène, étant donné leur prix de revient relativement bas et leurs bonnes propriétés chimiques et thermiques.

Les polymères oléfiniques présentent toutefois divers inconvénients. En particulier, pour réaliser une adhérence suffisante de la couche d'usure au substrat, il est généralement nécessaire d'utiliser des polymères fortement cristallins, ce qui réduit grandement la transparence de la couche d'usure superficielle. D'autre part, une cohésion suffisante du produit multicouche est incompatible avec la présence de charges minérales dans la couche de support ou substrat. L'impossibilité de charger la couche de support avec des matières minérales constitue un inconvénient majeur pour ce qui concerne les propriétés de résistance mécanique du produit multicouche et elle a par ailleurs un impact négatif sur son prix de revient.

Dans le document EP-B-0 930 156, on tente de remédier à cet inconvénient en incorporant dans le substrat une charge minérale sélectionnée parmi le sulfate de calcium, le carbonate de magnésium, la silice pyrogénée, l'hydrate d'aluminium, le kaolin et le sulfate de baryum et en utilisant pour la couche d'usure un copolymère du type ionomère.

Bien qu'ils combinent l'ensemble des propriétés recherchées pour les produits multicouches (notamment une bonne cohésion, de bonnes propriétés mécaniques et une couche superficielle transparente), ces produits connus ne sont pas conçus pour être fabriqués par la technique d'extrusion-soufflage. Avec ces produits connus, il est en effet impossible, au cours de l'opération de soufflage, d'obtenir une bulle stable dès que l'épaisseur des couches superposées excède 40 à 50 µm, ce qui est largement insuffisant, notamment pour ce qui concerne la couche d'usure contenant l'ionomère.

Le document US-A-6114046 concerne un matériau encapsulant comprenant une couche de polyéthylène métallocène disposée entre deux couches d'ionomère notamment pour l'utilisation dans des panneaux solaires.

Le document JP-A-2002219030 décrit une nappe de table comprenant une couche centrale à base d'éthylène disposée entre deux couches d'ionomère, éventuellement par l'intermédiaire d'une couche de polyéthylène métallocène.

Le document US-A-5350471 propose un procédé d'extrusion soufflage permettant de produire un film plastique multicouche à orientation croisée,

L'invention vise à adapter le produit connu décrit dans le document EP-B-0 930 156 à une fabrication par la technique de l'extrusion soufflage, tout en conservant ses bonnes propriétés physiques et chimiques, notamment sa cohésion interne, l'adhérence des couches le constituant, ses propriétés thermiques, sa résistance mécanique à l'usure et aux chocs, sa résistance aux agressions chimiques et la transparence de sa couche superficielle d'usure.

En conséquence, l'invention concerne des produits multicouches comprenant, sur un substrat potymérique, une couche d'usure en polymère du type ionomère, lesdits produits se caractérisant par la présence, entre le substrat et la couche d'usure, d'une couche intermédiaire d'un polymère oléfinique contenant de 1 à 40 parties en poids d'un métallocène pour 100 parties en poids du polymère oléfinique.

Le substrat des produits multicouches a pour fonction de servir de support mécanique. Il peut comporter une impression décoratives sur une de ses faces. Il comprend pour l'essentiel un composé polymérique, généralement oléfinique. Le composé polymérique peut être un homopolymère ou un copolymère oléfinique.

Par la suite, par raison de simplification, l'expression « polymère » désignera indifféremment un homopolymère ou un copolymère.

Le polymère oléfinique entrant dans la constitution du substrat des produits selon finvention peut être sélectionné parmi les polymères de l'éthylène, du propylène et du butylène. II peut être un homopolymère ou un copolymère, par exemple un copolymère de l'éthylène et du propylène ou un copolymère de l'éthylène et du butylène. Les polyéthylènes standard et/ou les polyéthylènes métallocène sont préférés. Les polyéthylènes à haute densité (HDPE), les polyéthylènes à basse densité (LDPE), les polyéthylènes linéaires à basse densité (LLDPE) et les polyéthylènes linéaires à très basse densité (VLDPE) sont spécialement recommandés.

Dans les produits multicouches selon l'invention, le polymère oléfinique du substrat est sensiblement exempt de liaisons ioniques.

Par l'expression « sensiblement exempt de liaison ionique », on entend que le nombre de groupements d'acides carboxyliques dans le polymère n'excède pas 25% et est par exemple compris entre 0 et 15%.

Le polymère du substrat des produits selon l'invention peut comprendre des charges minérales destinées à lui conférer des propriétés mécaniques particulières. Des charges minérales utilisables dans le substrat comprennent le carbonate de calcium, le carbonate de magnésium, le sulfate de calcium, le carbonate de baryum, le sulfate de baryum, le kaolin, la silice pyrogénée, l'hydrate d'aluminium et le graphite expansé.

La couche d'usure a pour fonction de protéger le substrat contre les agressions mécaniques et chimiques dans les applications auxquelles les produits multicouches selon l'invention sont destinés. Elle comprend un polymère du type ionomère.

Les polymères du type ionomère de la couche d'usure sont bien connus en technique. Il s'agit de copolymères à liaisons ioniques, comprenant une chaîne hydrocarbonée contenant des groupes latéraux d'acide carboxylique neutralisés partiellement ou totalement par des cations. La chaîne hydrocarbonée est une chaîne oléfinique, par exemple éthylénique. Les groupes d'acide carboxylique comprennent par exemple des acides carboxyliques éthyléniquement non saturés en α et β et les cations peuvent par exemple comprendre des cations métalliques ou des cations d'amine. Davantage d'informations concernant les copolymères du type ionomère sont notamment accessibles dans les documents FR-A-1 430 478, US-A-3 264 272 et US-A-3 322 734 ainsi que dans l'article « The structure and properties of ionomers » - W.J. Machnight et T.R. Earnest Jr., publié dans l'ouvrage Macromolecules Reviews, Vol. 16, pages 41-122 (1981).

L'épaisseur optimum de la couche d'usure dépend de divers paramètres, tels que la matière utilisée pour ladite couche d'usure et les applications auxquelles on destine les produits multicouches selon l'invention. En pratique, on obtient généralement de bons résultats avec des couches d'usure d'au moins 30 µm (de préférence 60 µm) d'épaisseur, les épaisseurs comprises entre 40 et 300 µm étant spécialement avantageuses.

En variante, la couche d'usure peut être revêtue d'une couche superficielle de polyuréthane, pour renforcer la résistance à l'usure par abrasion.

Selon l'invention, une couche intermédiaire d'un polymère oléfinique contenant un métallocène est interposée entre le substrat et la couche d'usure. Avantageusement, cette couche intermédiaire est transparente.

Le polymère oléfinique de la couche intermédiaire peut être indifféremment un homopolymère ou un copolymère. Les homopolymères conviennent bien. Les homopolymères de l'éthylène sont préférés et, parmi ceux-ci, les polyéthylènes à basse densité (LDPE) sont spécialement recommandés.

Dans les produits multicouches selon l'invention, la couche intermédiaire peut comprendre un polymère oléfinique unique ou un mélange de polymères oléfiniques différents, conformes à la définition précédente. Par la suite, sauf indication contraire, l'expression polymère oléfinique de la couche intermédiaire désignera indifféremment un polymère oléfinique unique ou un mélange d'au moins deux polymères oléfiniques différents, le ou chaque polymère pouvant indifféremment être un homopolymère ou un copolymère.

Dans les produits multicouches selon l'invention, le polymère oléfinique de la couche intermédiaire a également pour fonction de permettre la fabrication des produits multicouches par la technique d'extrusion soufflage ou d'en améliorer les performances. Il permet plus particulièrement, dans la mise en oeuvre de cette technique d'extrusion soufflage, de stabiliser des bulles de grande dimension et d'épaisseur suffisante.

Par métallocène, on entend les polyoléfines respectivement les polyéthylènes fabriqués à l'aide de catalyseurs métallocène qui sont bien connus en technique.

Dans les produits selon l'invention, le métallocène est avantageusement sélectionné parmi les polyoléfines et plus particulièrement parmi les polyéthylènes ayant une densité inférieure à 0.900.

Les produits multicouches selon l'invention peuvent comprendre un métallocène unique ou un mélange de métallocènes différents, conformes à la définition précédente. Par la suite, sauf indication contraire, l'expression métallocène désignera indifféremment un métallocène unique ou un mélange d'au moins deux métallocènes différents.

Dans les produits multicouches selon l'invention, le métallocène a pour fonction de réaliser une adhérence efficace et suffisante de la couche intermédiaire à la couche d'usure et au substrat. A cet effet, il est présent dans la couche intermédiaire en une quantité qui est de préférence supérieure à 1 partie (de manière plus préférée 5 parties) en poids pour 100 parties en poids du polymère oléfinique. On utilise avantageusement au moins 5 parties (de préférence au moins 15 parties) en poids de métallocène pour 100 parties en poids du polymère oléfinique.

II convient toutefois d'éviter une quantité exagérée de métallocène, sous peine de nuire à la stabilité de la bulle lorsque les produits selon l'invention sont fabriqués par la technique d'extrusion soufflage. De manière générale, on recommande que la quantité de métallocène dans le polymère oléfinique de la couche intermédiaire n'excède pas 40 parties en poids pour 100 parties en poids de polymère et soit de préférence inférieure à 30 parties en poids pour 100 parties en poids du polymère oléfinique. Des quantités de métallocène de 5 à 20 (de préférence de 8 à 15) parties en poids pour 100 parties en poids de polymère oléfinique conviennent généralement.

Dans les produits selon l'invention, le métallocène peut être introduit dans le polymère oléfinique de la couche intermédiaire sous la forme d'une charge.

Dans une forme de réalisation particulière des produits multicouches selon l'invention, une couche additionnelle de polyéthylène à basse densité (LDPE) est interposée entre le substrat et la couche intermédiaire précitée. Cette couche additionnelle peut également contenir des acides gras et/ou de la silice. Ces additifs améliorent d'une part l'adhérence de la couche intermédiaire au substrat et d'autre part facilitent l'extrusion par soufflage.

Les polymères entrant dans la constitution des produits multicouches selon l'invention peuvent éventuellement contenir des additifs communément présents dans les produits multicouches pour leur conférer des propriétés particulières ou faciliter leur mise en oeuvre, par exemple des lubrifiants, des plastifiants, des pigments ou des agents de moussage.

Les produits multicouches selon l'invention combinent un ensemble de propriétés intéressantes, considérées auparavant comme étant incompatibles, en particulier une haute résistance à l'usure par abrasion et aux autres agressions mécaniques, une haute résistance aux agressions chimiques et une grande cohésion.

Les produits multicouches selon l'invention sont spécialement adaptés à une fabrication par la technique de l'extrusion soufflage.

L'invention concerne dès lors également un procédé de fabrication d'un produit multicouche conforme à l'invention, selon lequel on extrude une paraison comprenant une couche interne d'un polymère oléfinique contenant un métallocène et une couche externe comprenant un polymère du type ionomère, on soumet la paraison à un soufflage et on écrase la bulle recueillie du soufflage.

Ce procédé permet de fabriquer un film multicouche comprenant une couche d'usure comprenant un polymère du type ionomère et une couche en un polymère oléfinique contenant un métallocène.

Selon un premier mode de réalisation avantageux, on extrude sur la couche intermédiaire d'un polymère oléfinique contenant un métallocène, une couche externe en polyoléfine, de préférence une couche externe en polyéthylène à basse densité. Le film ainsi obtenu comprend une couche externe d'un produit qui sert à former la couche d'usure du produit multicouche, une couche intermédiaire d'un polymère oléfinique comprenant le cas échéant des additifs tels que des acides gras et/ou de la silice et une couche en un polymère oléfinique comprenant un métallocène.

Des informations plus détaillées concernant ces couches et leurs constituants respectifs peuvent dès lors être trouvées plus haut.

Les techniques d'extrusion et de soufflage mises en oeuvre dans le procédé selon l'invention sont bien connues dans les procédés de mise en oeuvre des matières plastiques. Toute technique adéquate connue peut être utilisée pour écraser la bulle recueillie du soufflage. On utilise avantageusement une technique de laminage entre des cylindres métalliques. Après écrasement de la bulle, le film obtenu est séparé et puis fixé (par exemple par doublage ou bien par laminage) sur un support pour former le produit multicouche décrit plus haut.

Dans une forme d'exécution avantageuse du procédé selon l'invention, on règle le soufflage de la paraison pour que la circonférence de la bulle mesure au moins 8 m et que son épaisseur soit de 150 à 250 µm.

Le procédé selon l'invention permet d'obtenir des produits multicouches de grandes dimensions, dont la largeur peut atteindre plusieurs mètres et l'épaisseur plusieurs dizaines de microns. Plus spécialement, le procédé selon l'invention permet la fabrication de produits multicouches en bandes dont la largeur excède 4 m (et peut même atteindre 8 m et davantage) et dont l'épaisseur excède 60 µm et peut même atteindre 200 µm et davantage.

Les produits selon l'invention trouvent des applications multiples. Ils trouvent des applications dans l'industrie du bâtiment, pour la confection de tapis, de moquettes et de revêtements muraux. On les utilise également dans l'industrie automobile, l'aviation, la marine et le chemin de fer, pour la fabrication de moquettes ainsi que pour le recouvrement des parois des habitacles, cockpits et cabines des véhicules.

L'invention a dès lors également pour objet l'utilisation de produits conformes à l'invention pour la confection de revêtements de sols ou muraux ainsi que pour le recouvrement de parois d'habitacles de véhicules, spécialement de véhicules destinés au transport de personnes.

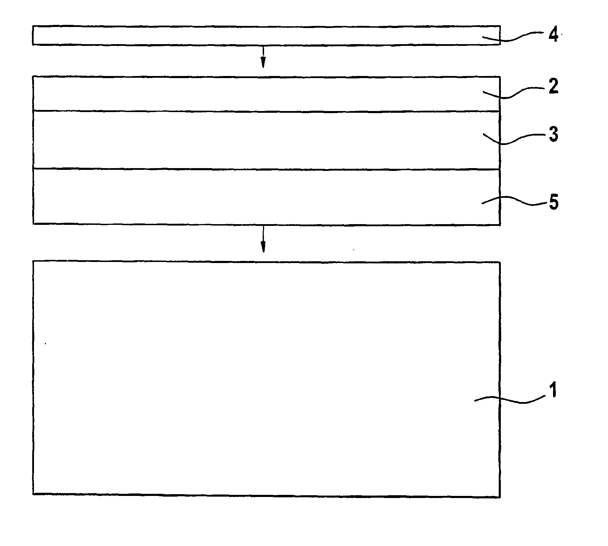

La description qui suit de la figure unique du dessin annexé illustre une forme de réalisation particulière des produits selon l'invention.

Le produit schématisé à la figure comprend, conformément à l'invention, un substrat 1, une couche d'usure 2 et une couche intermédiaire 3.

Le substrat 1 qui constitue le support imprimé, chargé, avec ou sans paillettes, est constitué d'une couche de polyéthylène à basse densité, contenant une charge minérale, par exemple du sulfate de calcium, du graphite expansé ou de carbonate de magnésium.

La couche d'usure 2 comprend un copolymère éthylénique du type ionomère.

La couche intermédiaire 3 est formée de polyéthylène à basse densité (LDPE) contenant un métallocène.

Une couche superficielle 4 en polyuréthane est appliquée sur la couche d'usure 1 et une couche additionnelle 5 en polyéthylène à basse densité (LDPE) contenant le cas échéant des additifs tels que des acides gras et/ou de la silice est interposée entre le substrat 1 et la couche intermédiaire 3.

## Revendications

1. Produit multicouche comprenant, sur un substrat polymérique, une couche d'usure en polymère du type ionomère, **caractérisé en ce qu'**il comprend, entre le substrat et la couche d'usure, une couche intermédiaire d'un polymère oléfinique contenant de 1 à 40 parties en poids d'un métallocène pour 100 parties en poids du polymère oléfinique.

2. Produit selon la revendication 1, **caractérisé en ce que** le substrat poiymérique et le polymère du type ionomère comprennent des polymères oléfiniques.

3. Produit selon la revendication 2, **caractérisé en ce que** les polymères oléfiniques du substrat et de la couche intermédiaire comprennent du polyéthylène basse densité.

4. Produit selon l'une quelconque des revendications 1 à 3, **caractérisé en ce que** la couche intermédiaire contient de 5 à 30 parties en poids de métallocène pour 100 parties en poids du polymère oléfinique.

5. Produit selon la revendication 4, **caractérisé en ce que** la couche intermédiaire contient de 8 à 15 parties en poids de métallocène pour 100 parties en poids du polymère oléfinique.

6. Produit selon l'une quelconque des revendications 1 à 5, **caractérisé en ce qu'**une couche additionnelle en polyoléfine éthylène à basse densité est interposée entre le substrat et la couche intermédiaire.

7. Produit selon la revendication 6, **caractérisé en ce que** la couche additionnelle comprend du polyéthylène à base densité et le cas échéant un ou plusieurs additifs choisis parmi le groupe constitué des acides gras et de la silice.

8. Produit selon l'une quelconque des revendications 1 à 7, **caractérisé en ce qu'**il comprend une couche superficielle en polyuréthane sur la couche d'usure.

9. Procédé de fabrication d'un produit multicouche conforme à l'une quelconque des revendications 1 à 8, selon lequel on extrude par soufflage une paraison comprenant une couche d'un polymère oléfinique contenant un métallocène et une couche externe en polymère du type ionomère pour former une bulle, on écrase la bulle recueillie de l'extrusion par soufflage pour obtenir un film doublé, on sépare le film doublé pour obtenir deux films multicouches séparés, et on fixe un des films sur un substrat.

10. Procédé selon la revendication 9, **caractérisé en ce qu'**on extrude sur la couche intermédiaire d'un polymère oléfinique contenant un métallocène, une couche externe en polyoléfine, de préférence une couche externe en polyéthylène à basse densité.

11. Procédé selon la revendication 9 ou 10, **caractérisé en ce qu'**on règle le soufflage de la paraison pour que la circonférence de la bulle mesure au moins 8 m et que son épaisseur soit de 150 à 250 µm.

12. Utilisation de produits conformes à l'une quelconque des revendications 1 à 8, pour la confection de revêtements de sol ou muraux.

## Claims

1. A multilayer product comprising, on a polymeric substrate, a wear layer in a polymer of the ionomer type, **characterized in that** it comprises between the substrate and the wear layer, an intermediate layer of an olefinic polymer containing from 1 to 40 parts by weight of a metallocene for 100 parts by weight of the olefinic polymer.

2. The product according to claim 1, **characterized in that** the polymeric substrate and the ionomer type polymer comprise olefinic polymers.

3. The product according to claim 2, **characterized in that** the olefinic polymers of the substrate and of the intermediate layer, comprise low density polyethylene.

4. The product according to any of claims 1 to 3, **characterized in that** the intermediate layer contains from 5 to 30 parts by weight of metallocene for 100 parts by weight of the olefinic polymer.

5. The product according to claim 4, **characterized in that** the intermediate layer contains from 8 to 15 parts by weight of metallocene for 100 parts by weight of the olefinic polymer.

6. The product according to any of claims 1 to 5, **characterized in that** an additional low density olefinic polyethylene layer is interposed between the substrate and the intermediate layer.

7. The product according to claim 6, **characterized in that** the additional layer comprises low density polyethylene and if need be, one or more additives selected from the group of fatty acids and silica.

8. The product according to any of claims 1 to 7, **characterized in that** it comprises a surface polyurethane layer on the wear layer.

9. A method for manufacturing a multilayer product according to any of claims 1 to 8, according to which a parison comprising a layer of metallocene-containing olefinic polymer and an external ionomer type polymer layer is extruded by blowing in order to form a bubble, the bubble collected from the extrusion by blowing is crushed in order to obtain a doubled film, the doubled film is separated in order to obtain two separate multilayer films, and one of the films is fixed on a substrate.

10. The method according to claim 9, **characterized in that** an external polyolefinic layer, preferably an external low density polyethylene layer, is extruded onto the intermediate layer of an metallocene-containing olefinic polymer.

11. The method according to claim 9 or 10, **characterized in that** blowing of the parison is adjusted so that the circumference of the bubble measures at least 8 m and its thickness is from 150 to 250 µm.

12. The use of products according to any of claims 1 to 8, for making floorings or wall claddings.

## Patentansprüche

1. Mehrlagiges Produkt, das auf einem Polymersubstrat eine Verschleißlage aus Polymer vom ionomeren Typ umfasst, **dadurch gekennzeichnet, dass** es zwischen Substrat und Verschleißlage eine Zwischenlage aus einem olefinischen Polymer umfasst, das 1 bis 40 Gewichtsteile eines Metallocens auf 100 Gewichtsteile des olefinischen Polymers enthält.

2. Produkt nach Anspruch 1 **dadurch gekennzeichnet, dass** das Polymersubstrat und das Polymer vom ionomeren Typ olefinische Polymere umfassen.

3. Produkt nach Anspruch 2 **dadurch gekennzeichnet, dass** die olefinischen Polymere des Substrats und der Zwischenlage Polyethylen niedriger Dichte umfassen.

4. Produkt nach irgendeinem der Ansprüche 1 bis 3 **dadurch gekennzeichnet, dass** die Zwischenlage 5 bis 30 Gewichtsteile an Metallocen auf 100 Gewichtsteile des olefinischen Polymers enthält.

5. Produkt nach Anspruch 4 **dadurch gekennzeichnet, dass** die Zwischenlage 8 bis 15 Gewichtsteile an Metallocen auf 100 Gewichtsteile des olefinischen Polymers enthält.

6. Produkt nach irgendeinem der Ansprüche 1 bis 5 **dadurch gekennzeichnet, dass** eine zusätzliche Lage aus Ethylenpolyolefin niedriger Dichte zwischen Substrat und Zwischenlage eingefügt ist.

7. Produkt nach Anspruch 6 **dadurch gekennzeichnet, dass** die zusätzliche Lage ein Polyethylen niedriger Dichte und gegebenenfalls einen Zusatzstoff oder mehrere Zusatzstoffe umfasst, die aus der aus Fettsäuren und Silika bestehenden Gruppe ausgewählt sind.

8. Produkt nach irgendeinem der Ansprüche 1 bis 7 **dadurch gekennzeichnet, dass** es eine Oberflächenschicht aus Polyurethan auf der Verschleißlage umfasst.

9. Verfahren zur Herstellung eines mehrlagigen Produkts nach irgendeinem der Ansprüche 1 bis 8, wonach man durch Blasformen einen Vorformling extrudiert, der eine Schicht aus einem ein Metallocen enthaltenden olefinischen Polymer und eine äußere Schicht aus Polymer vom ionomeren Typ umfasst, um eine Blase zu bilden, man die durch die Extrusion durch Blasformen erhaltene Blase zerdrückt damit man einen doublierten Film erhält, man den doublierten Film trennt, um zwei getrennte mehrlagige Filme zu erhalten, und man einen der Filme auf einem Substrat fixiert.

10. Verfahren nach Anspruch 9 **dadurch gekennzeichnet, dass** man auf der Zwischenlage aus einem ein Metallocen enthaltenden olefinischen Polymer eine äußere Schicht aus einem Polyolefin, vorzugsweise eine äußere Schicht aus einem Polyethylen niedriger Dichte extrudiert.

11. Verfahren nach Anspruch 9 oder 10 **dadurch gekennzeichnet, dass** man das Blasformen des Vorformlings derart regelt, dass der Umfang der Blase mindestens 8 m misst und ihre Dicke zwischen 150 und 250 µm beträgt.

12. Verwendung der Produkte nach irgendeinem der Ansprüche 1 bis 8 zur Herstellung von Boden- oder Wandverkleidungen.
